# EUROPÄISCHE PATENTSCHRIFT

(11) **EP 1 769 959 B1**
(45) Veröffentlichungstag und Bekanntmachung des Hinweises auf die Patenterteilung: **24.08.2011**
(21) Anmeldenummer: 06018070.0
(22) Anmeldetag: 30.08.2006
(51) Int. Cl.: B60J 7/14

(54) **Cabriolet-Fahrzeug mit einer abwärts verlagerbaren hinteren Dacheinheit**
Convertible vehicle with a rear roof unit which can be folded away in a downwards direction
Véhicule convertible avec une unité de toit arrière rabattable vers le bas

(30) Priorität: 30.09.2005 DE 102005047316
(43) Veröffentlichungstag der Anmeldung: 04.04.2007
(73) Patentinhaber: Wilhelm Karmann GmbH, 49084 Osnabrück (DE)
(72) Erfinder: Brockhoff, Franz Ulrich, 49565 Bramsche (DE)
(74) Vertreter: Kronthaler, Schmidt & Coll.

(56) Entgegenhaltungen:
- WO-A-2004/037579

## Beschreibung

Die Erfindung betrifft ein Cabriolet-Fahrzeug mit einer hinteren, eine Heckscheibe umfassenden Dacheinheit nach dem Oberbegriff des Anspruchs 1 sowie ein zugehöriges Fahrzeugdach.

Es ist bekannt, Cabriolet-Fahrzeuge mit einer hinteren Dacheinheit, einem daran vorgeordneten Dachteil und einer oder mehreren dieser vorgeordneten weiteren Dachteil(en) auszubilden, die insgesamt zur Dachöffnung in die Fahrzeugkarosserie absenkbar sind. Die hintere Dacheinheit kann dabei gegenüber der Karosserie derart abwärts verlagerbar sein, daß sie in abgelegter Stellung als unterster Teil des geöffneten Daches im wesentlichen horizontal liegt und mit der bei geschlossenem Dach dem Insassenraum zugewandten Seite nach oben zeigt. Während des Dachöffnens oder -schließens kann sich bei der Abwärts- oder Aufwärtsverlagerung dieser Dacheinheit - bei einem solchen Wenden in eine Über-Kopf-Lage insbesondere im Bereich ihrer hinteren Kante - eine Kollisionsgefahr mit hinteren Radhäusern und/oder aufragenden Federbeindomen ergeben.

Aus der WO 2004/037579 A1 ist weiter eine Lageveränderbarkeit einer Halterung, um die herum eine Heckscheibe während der Dachöffnung heckwärts und abwärts verlagerbar ist, bekannt, um damit ein horizontales Einlaufen oder Herausziehen von Verriegelungszapfen in einen oder aus einem Windschutzscheibenrahmen zu ermöglichen. Diese Lageveränderbarkeit der Halterung hat jedoch keinen Einfluß auf die Heckwärts- und Abwärtsverlagerung der Dachteile um die verschiebbare Halterung.

Der Erfindung liegt das Problem zugrunde, hier eine Verbesserung zu erreichen.

Die Erfindung löst dieses Problem durch ein Cabriolet-Fahrzeug mit den Merkmalen des Anspruchs 1 sowie durch ein bewegliches Fahrzeugdach mit den Merkmalen des Anspruchs 12. Weitere vorteilhafte Ausgestaltungen der Erfindung sind den Ansprüche 2 bis 11 zu entnehmen.

Durch die erfindungsgemäße Lageveränderlichkeit der Halterung, um die die hintere Dacheinheit bewegbar ist, während der Abwärts- und Heckwärtsbewegung zumindest einer Heckscheibe um eben diese Halterung kann eine Bewegungskurve für die hintere Dacheinheit geschaffen werden, die den Erhöhungen von Radhäusern und/oder Federdomen ausweicht.

Sofern vorteilhaft die Halterung während der Dachöffnung gegenüber der geschlossenen Dachstellung bezüglich der Fahrzeugkarosserie aufwärts verlagert ist, findet in jedem Fall eine Aufwärtsverlagerung der Bahnkurve statt, so daß sie über weit nach oben ragende Hindernisse führt. Mit einem während der Dachöffnung zunächst durchgeführten Relativanheben der Halterung und einer im weiteren wieder absinkenden Relativbewegung läßt sich erreichen, daß Anfangs- und Endpunkt der Bewegung auf derselben Bahnkurve wie bei einer Bewegung ohne diese Zusatzkomponente liegen. Dadurch kann die Gesamtkinematik unverändert bleiben, das abgelegte Dach erhält exakt dieselbe Lage wie zum Beispiel bei einer reinen Schwenk- oder kulissengeführten Bewegung um eine Halterung ohne deren zusätzliche Relativbewegung.

Besonders einfach, jedoch nicht zwingend umfaßt die bewegliche Halterung eine Lagerachse, um die herum die Heckscheibe schwenkbar ist. Dann ergibt sich um die bewegliche Halterung herum eine Kreisbahn, der die Relativbewegung der Halterung überlagert ist.

Die Bewegung und die diese vermittelnden Kinematikteile können sehr einfach gehalten sein, wenn die Heckscheibe mittelbar oder unmittelbar über einen bezüglich der Heckscheibe starren Hebel mit der Lagerachse verbunden ist.

Dabei ist vorteilhaft ein einziger Antrieb ausreichend, um die Drehbewegung des Hebels um die Lagerachse und gleichzeitig die Verlagerung der Halterung mit Hilfe eines Kurbeltriebs bewirken zu können.

Die zwangsweise Synchronisation beider Bewegungen läßt sich ohne zusätzlichen Aufwand sicherstellen, indem der starre Hebel und ein Hebel des Kurbeltriebs mit zueinander starrem Winkel um die Lagerachse bewegbar und somit gekoppelt sind. Eine weitere Vereinfachung ergibt sich, wenn die Halterung neben dem Kurbeltrieb über einen starr mit der Halterung verbundenen Schwenkhebel an der Karosserie gehalten ist.

Eine besonders flache und schmale Dachablage kann sichergestellt sein, wenn in der hinteren Dacheinheit seitlich der Heckscheibe liegende C-Säulen während der Dachöffnung gegenüber der Heckscheibe einschwenkbar sind. Da insbesondere ein vorgeordnetes Dachteil ohnehin in abgelegter Stellung gegenläufig zum hinteren Dachteil orientiert und gewölbt ist, steht für die eingeschwenkten C-Säulen genug Raum zur Verfügung, ohne daß die Dicke des abgelegten Dachpakets zunehmen müßte. Insbesondere können die C-Säulen in den Hohlraum zwischen gegenläufig gewölbten Dachteilen einschwenkbar sein. Das Dachpaket ist deutlich schmaler gegenüber festen C-Säulen, so daß der Ablageraum des Daches verschmälert und die Randfuge eines Verdeckkastendeckels erheblich zur Fahrzeugmitte hin rücken kann, was die Designmöglichkeiten am Fahrzeug verbessert.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:
- Fig. 1: eine schematische, nach vorne und unten abgebrochene Seitenansicht eines erfindungsgemäßen Cabriolet-Fahrzeugs bei geschlossenem Dach, wobei der Übersicht halber ein starr an der Halterung angeordneter und diese mit der Fahrzeugkarosserie verbindender Schwenkhebel nicht eingezeichnet ist, jedoch zusätzlich ein nur bei geöffnetem Dach separat ansteuerbarer Hebel zur Anhebung des abgelegten Daches und die Bewegungsbahnen mit und ohne Relativbewegung der Halterung eingezeichnet sind,
- Fig. 2: eine ähnliche Ansicht wie Fig. 1 bei noch geschlossenem Dach und einem für die Dachöffnung bereits geöffneten Heckdeckel, jedoch ohne den separat ansteuerbaren Hebel und ohne die Bewegungsbahnen,
- Fig. 3: eine ähnliche Ansicht wie Fig. 2 während der beginnenden Dachöffnung durch Verschwenken der hinteren Dacheinheit um die Lagerachse bei gleichzeitigem Anheben der Halterung,
- Fig. 4: eine ähnliche Ansicht wie Fig. 3 bei weiter fortschreitender Dachöffnung,
- Fig. 5: eine ähnliche Ansicht wie Fig. 4 bei weiter fortschreitender Dachöffnung,
- Fig. 6: eine ähnliche Ansicht wie Fig. 5 mit fast abgelegten Dachteilen,
- Fig. 7: eine ähnliche Ansicht wie Fig. 6 mit vollständig geöffnetem Dach und noch geöffnetem Heckdeckel,
- Fig. 8: das Fahrzeug nach Fig. 7 bei geschlossenem Heckdeckel,
- Fig. 9: eine Ausschnittsvergrößerung der Ansicht nach Fig. 1 mit Einzeichnung des zusätzlichen Schwenkhebels und ohne die Bewegungsbahnen,

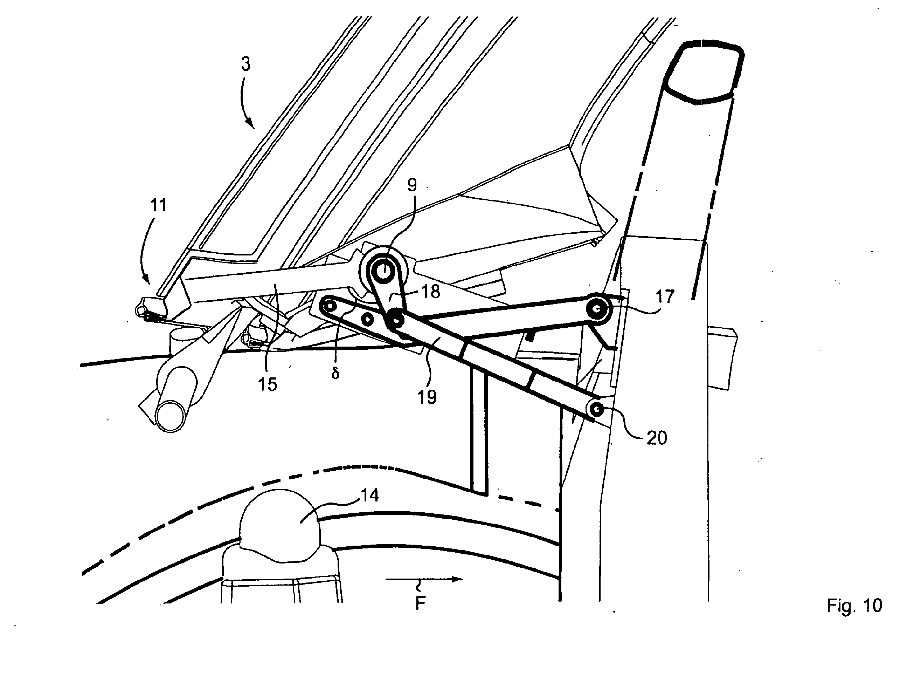

- Fig. 10: eine ähnliche Ansicht wie Fig. 9 während der beginnenden Dachöffnung, etwa entsprechend der Dachstellung nach Fig. 3,

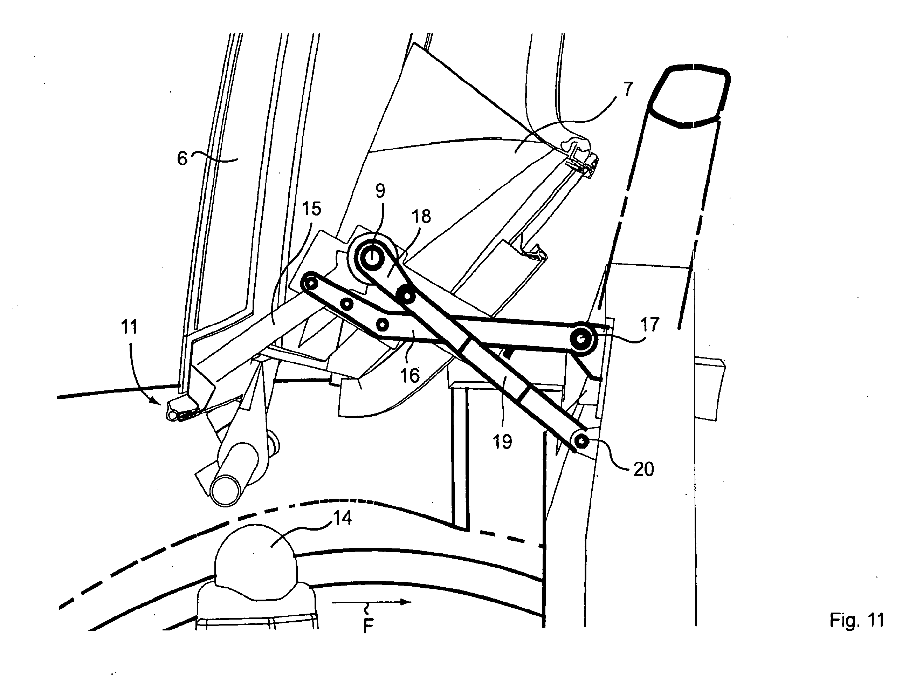

- Fig. 11: eine ähnliche Ansicht wie Fig. 10 während der weiter fortschreitenden Dachöffnung, etwa entsprechend der Dachstellung nach Fig. 4,

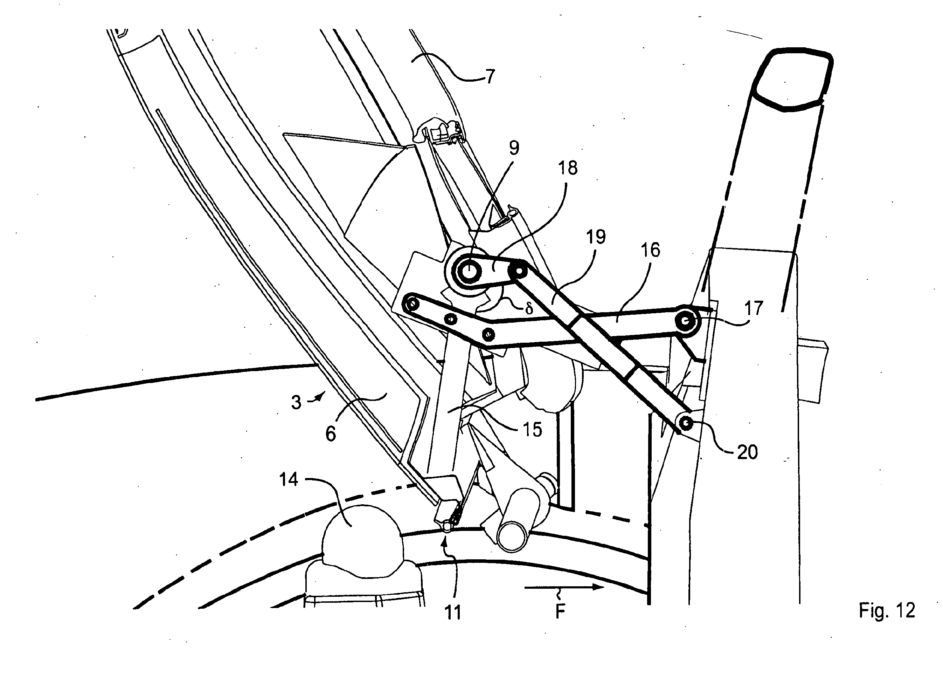

- Fig. 12: eine ähnliche Ansicht wie Fig. 11 während der weiter fortschreitenden Dachöffnung, etwa entsprechend der Dachstellung nach Fig. 5,

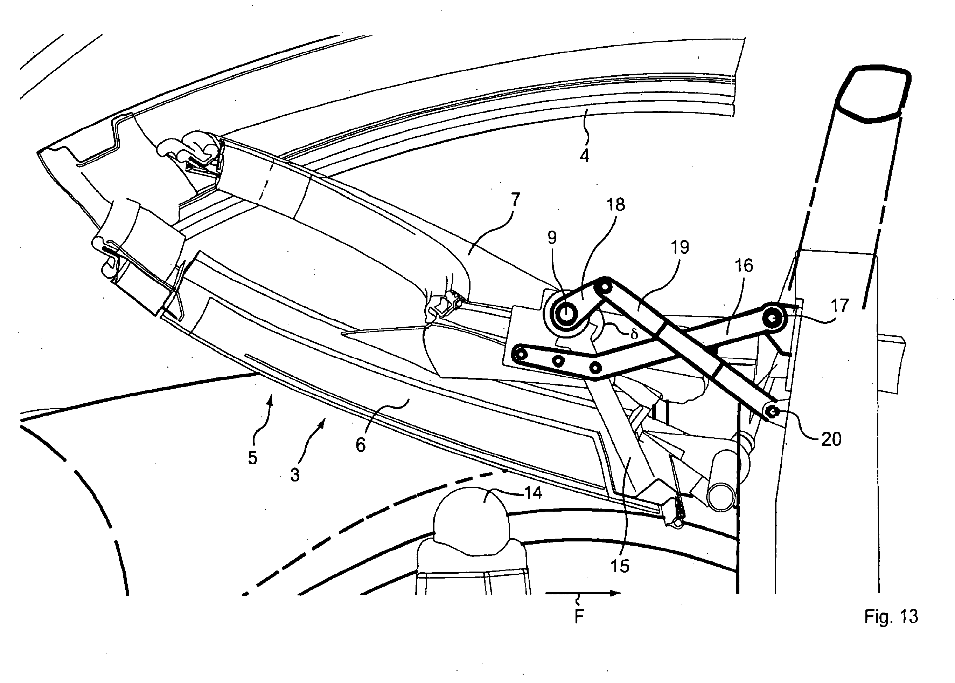

- Fig. 13: eine ähnliche Ansicht wie Fig. 12 mit fast vollständig geöffnetem Dach, etwa entsprechend der Dachstellung nach Fig. 6,

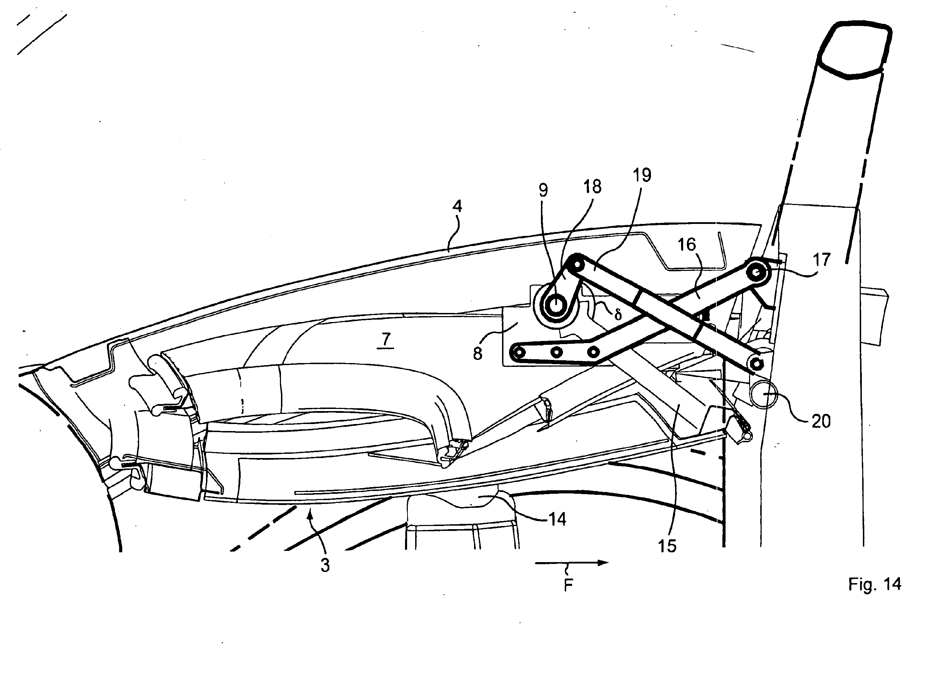

- Fig. 14: eine ähnliche Ansicht wie Fig. 13 mit vollständig geöffnetem Dach, entsprechend der Dachstellung nach Fig. 7.

Ein erfindungsgemäße Cabriolet-Fahrzeug 1 umfaßt im hier dargestellten Ausführungsbeispiel zwei bei geschlossenem Dach 2 bezüglich der Fahrtrichtung F aufeinander folgende und voneinander getrennte Dachabschnitte 3, 4. Weitere Dachabschnitte zur Überbrückung eines längeren Fahrzeuginnenraums, insbesondere mit zwei oder mehr Sitzreihen, sind möglich und können nach vorne hin anschließen. Hier ist nur beispielhaft ein Zweisitzer dargestellt.

Gemäß der Zeichnung umfaßt hier die hintere Dacheinheit 3 im bezüglich der Fahrzeugquerrichtung mittleren Bereich 5 eine Heckscheibe 6 und seitlich außen gegenüber dieser separate C-Säulen 7. Das dieser vorgeordnete Dachteil 4 weist hier eine durchgehende Außenfläche auf, könnte beispielsweise auch noch ein Hub- oder Schiebedach enthalten.

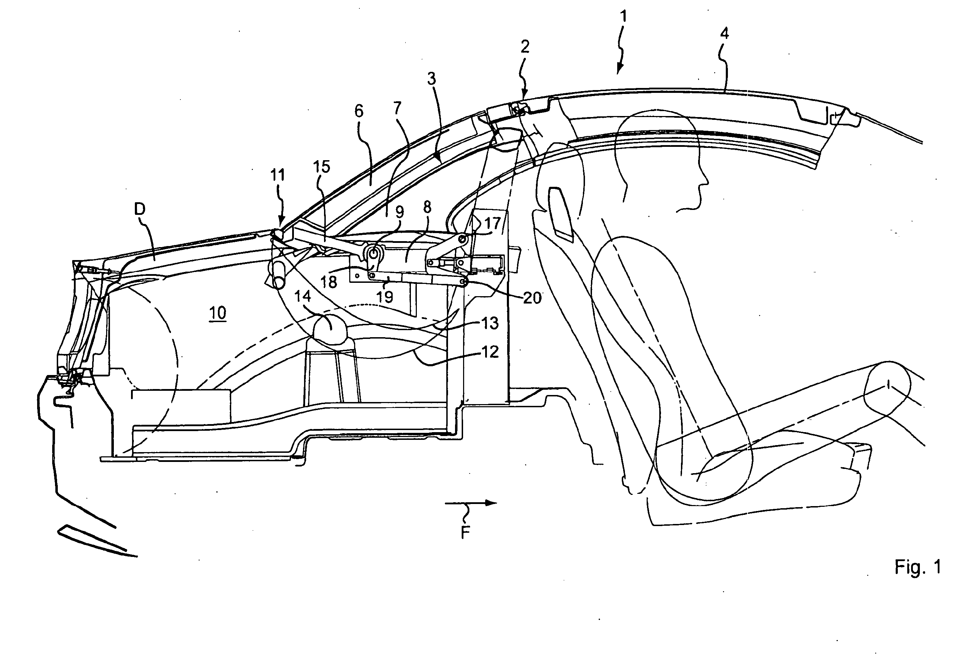

Die hintere Dacheinheit 3 ragt in geschlossener Stellung schräg aufwärts. Das Dachteil 4 ist dem hinteren Dachteil 3 in geschlossener Stellung (Fig. 1) vorgeordnet und liegt im wesentlichen horizontal oberhalb des Insassenraums. Beide Dachabschnitte 3, 4 sind im wesentlichen aus starren Teilen gebildet, umfassen zumindest starre Rahmen, über die teilweise ein Bezug gespannt sein kann.

Zur Dachöffnung ist die hintere Dacheinheit 3 heckwärts und abwärts um eine insgesamt mit 8 bezeichnete Halterung verlagerbar und das vorgeordnete Dachteil 4 an die hintere Dacheinheit 3 beispielsweise heranschwenkbar. Auch eine Parallelverlagerung oder ähnliches wäre möglich. Die Halterung 8 umfaßt eine Lagerachse 9, um dadurch eine Schwenkbewegung für die Abwärtsverlagerung der hinteren. Dacheinheit zu ermöglichen. Auch eine andere Ablagebewegung ist möglich.

Die Lagerachse 9 ist jedoch nicht starr gegenüber der Fahrzeugkarosserie 10 gelegen, sondern ist während des Dachöffnens und -schließens gegenüber dieser lageveränderlich, und zwar derart, daß die in geschlossener Dachstellung hintere, untere Kante 11 der hinteren Dacheinheit 3 nicht wie bei einer reinen Schwenkbewegung um die Achse 9 auf einer Kreisbahn 12, sondern auf einer gegenüber dieser angehobenen Bahn 13 geführt wird (Fig. 1). Die Halterung 8 mit der Lagerachse 9 ist hierfür während der Dachöffnungs- oder schließbewegung gegenüber der geschlossenen Dachstellung bezüglich der Fahrzeugkarosserie 10 aufwärts verlagert. Bei geschlossenem und bei vollständig geöffnetem Dach 2 können sich die Bahnkurven 12, 13 schneiden, so daß in diesen Endstellungen die Position der Halterung 8 gegenüber der Fahrzeugkarosserie 10 der Position einer starr angeordneten Achse 9 entspricht. Es müssen somit an der Fahrzeuggeometrie keine Änderungen für das Vorsehen der verlagerbaren Halterung 8 vorgenommen werden. Diese Lösung ist daher auch nachrüstbar.

Alternativ ist es auch möglich, daß die Endstellung der Bahnkurve 13 nicht auf der Kreisbahn liegt, sondern zum Beispiel unterhalb von dieser, um damit das Dach 2 bei seiner Öffnung insgesamt abzusenken und eine für bestimmte Fahrzeuggeometrien besonders günstige Packstellung zu ermöglichen.

Durch die Aufwärtsverlagerung der Kante 11 während der Dachbewegung ist eine Kollision des Daches 2 mit zum Beispiel einem Radhaus oder Federbeindom 14 vermieden.

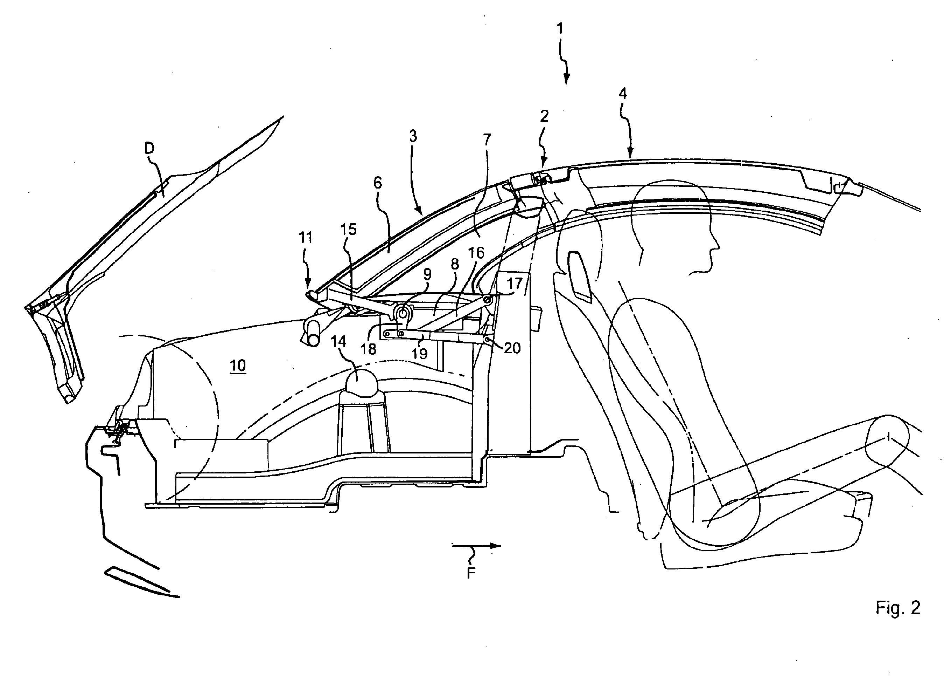

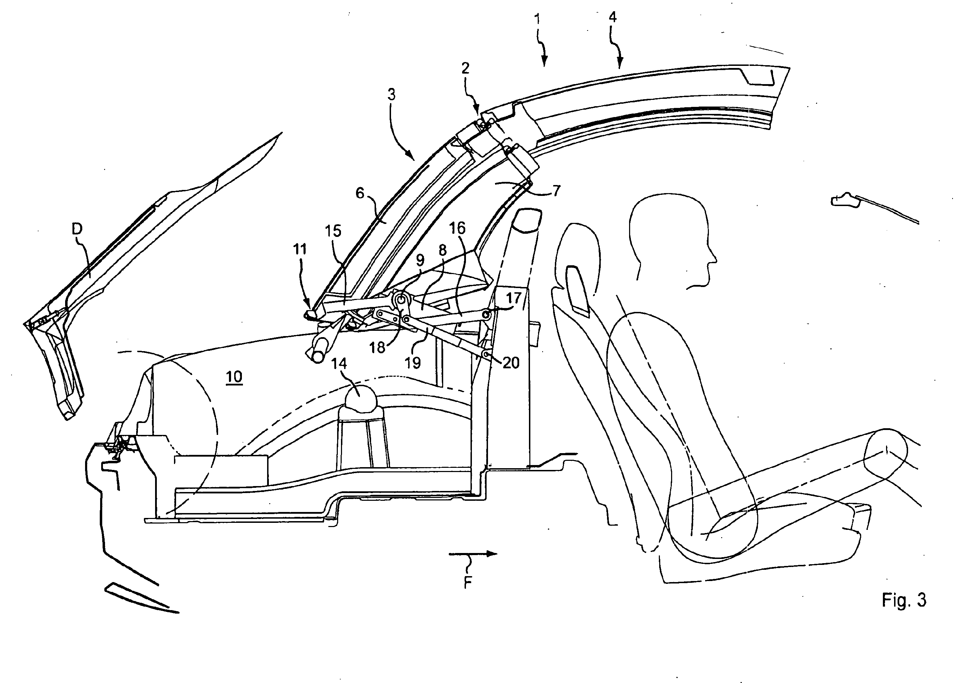

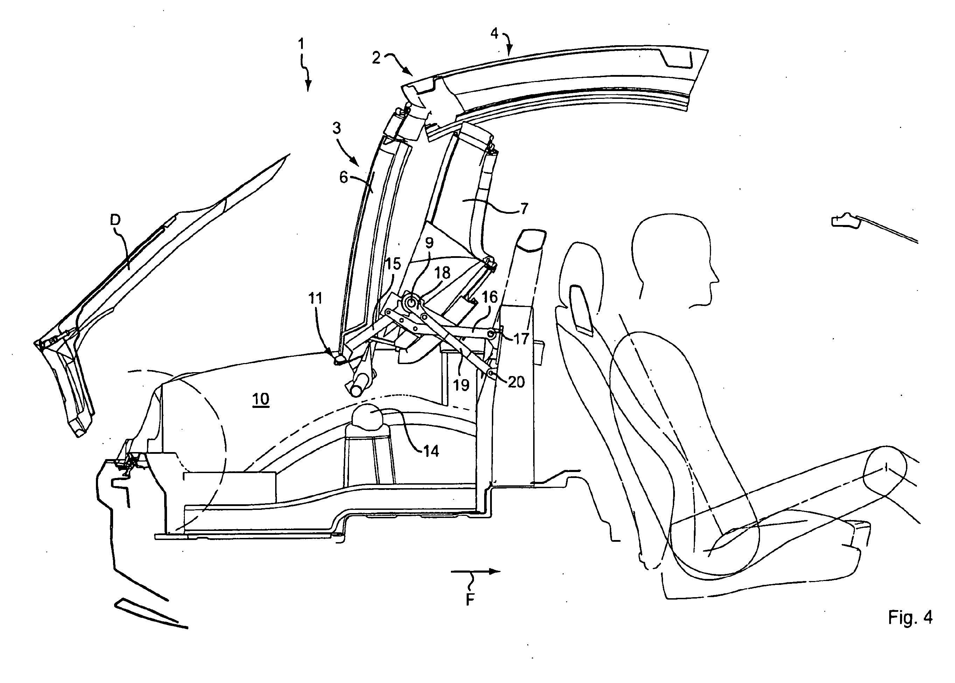

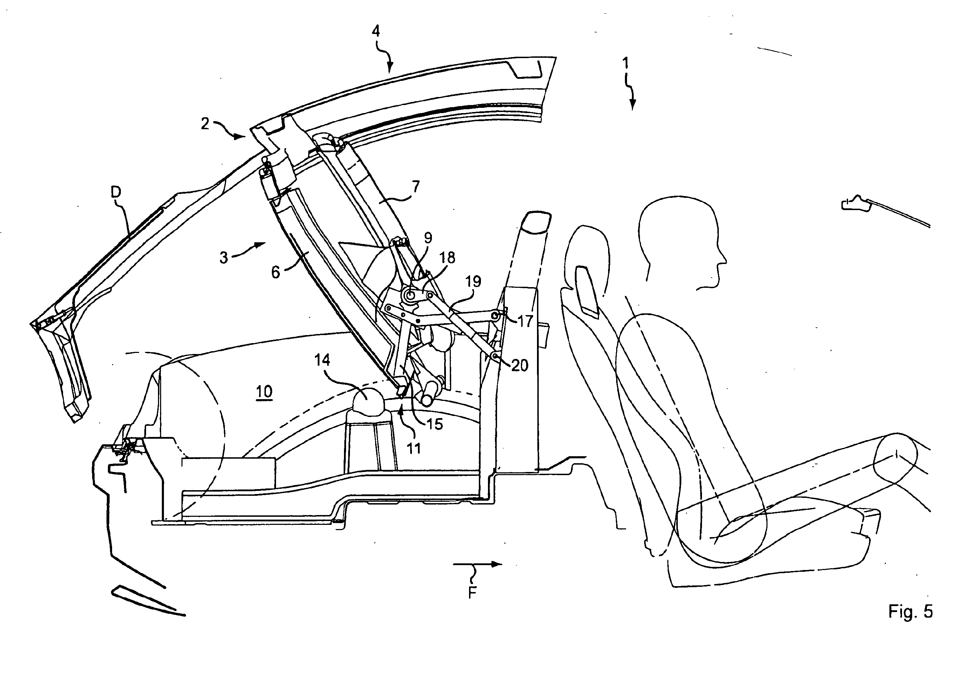

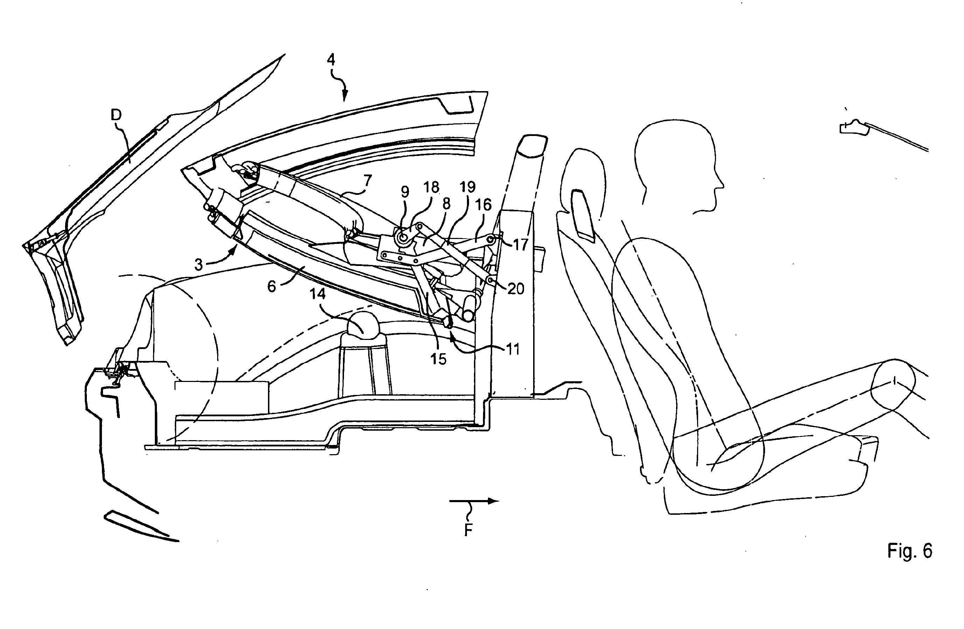

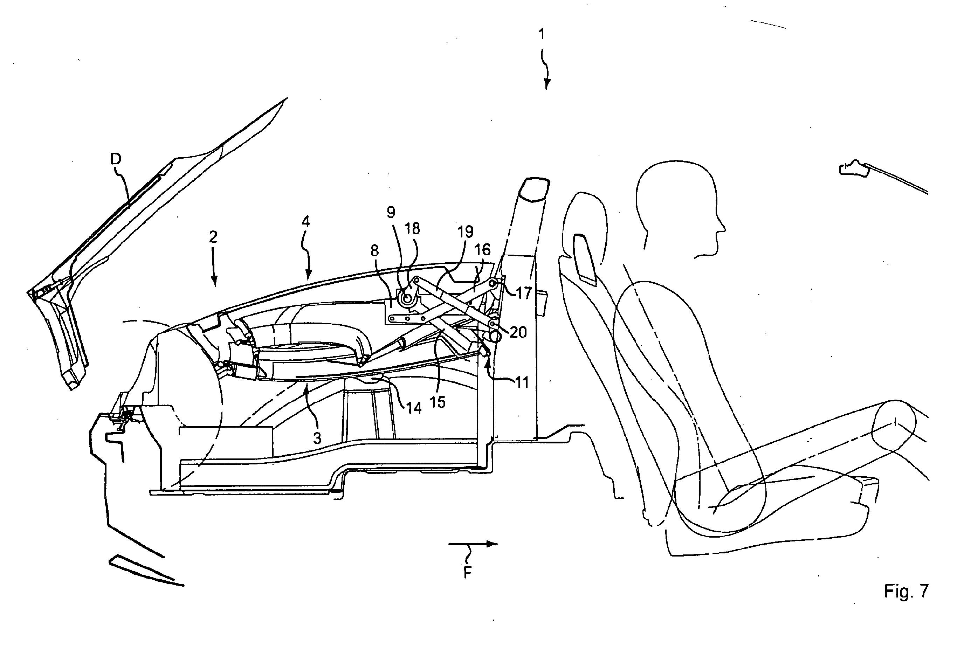

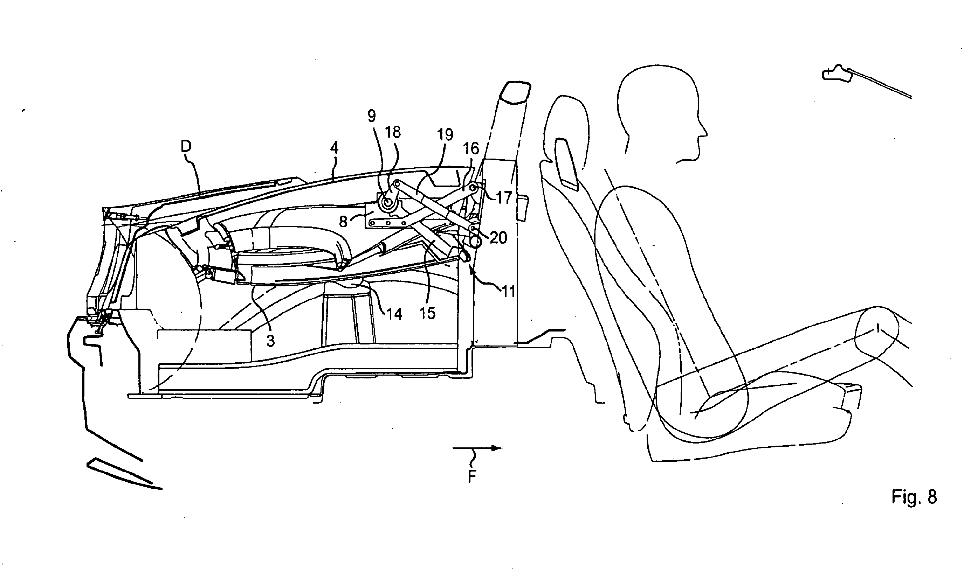

Der mittlere Bereich 5 der hinteren Dacheinheit 3 mit der Heckscheibe 6 ist mittelbar oder unmittelbar in seinem unteren Bereich über einen bezüglich der Heckscheibe 6 starren Hebel 15 mit der Lagerachse 9 verbunden. Eine Drehbewegung um die Achse 9 führt dadurch direkt zu einer Schwenkbewegung der hinteren Dacheinheit 3. Die Halterung 8 ist einerseits über einen fest mit dieser verbundenen Schwenkhebel 16 - in Fig. 1 bis Fig. 8 nicht eingezeichnet - an der Karosserie 10 abgestützt, wobei der Schwenkhebel 16 um eine horizontal und quer in der Karosserie 10 liegende Achse 17 schwenkbeweglich ist. Andererseits ist ein Kurbeltrieb mit einem kurzen Hebel 18 und einem langen Hebel 19 vorgesehen, wobei der lange Hebel 19 ebenfalls um eine horizontal und quer in der Karosserie 10 liegende Achse 20 schwenkbar ist. Auch diese Achse 20 ist während der Dachöffnungs- oder Schließbewegung karosseriefest. Eine besondere Beweglichkeit dieser Achse 20 bei abgelegtem Dach 2 ist unten noch näher erläutert.

Um das Dach 2 zu öffnen oder zu schließen, sind nach Öffnung eines hinteren Deckelteils D die Drehbewegung des starren Hebels 15 um die Lagerachse 9 und die Verlagerung der Halterung 8 mit Hilfe des Kurbeltriebs 18;19 gleichzeitig über einen im Bereich der Lagerachse 9 gelegenen Antrieb, der nicht eingezeichnet ist, bewirkbar.

Der Winkel δ zwischen dem starren Hebel 15 und dem kurzen Hebel 18 des Kurbeltriebs bleibt hierfür konstant, so daß die Schwenkbewegungen des Kurbeltriebs 18, 19 und der hinteren Dacheinheit 3 um die Lagerachse 9 miteinander zwangsgekoppelt sind. Über den Kurbeltrieb 18, 19 wird dabei die Halterung 8 mit der Lagerachse 9 bis etwa zur Mitte der Bewegung angehoben (Differenz der Bahnen 12 und 13) und danach wieder abgesenkt, um am Ende der Bewegung wieder auf einer Kreisbahn 12 zu liegen. Für den gesamten Ablauf der Bewegung reicht ein einziger Antrieb, der primär zum Beispiel die Drehbewegung des starren Hebels 15 um die Achse 9 bewirken kann und dadurch den Kurbeltrieb 18, 19 mitnimmt und somit die Halterung 8 mit der Achse 9 bewegt.

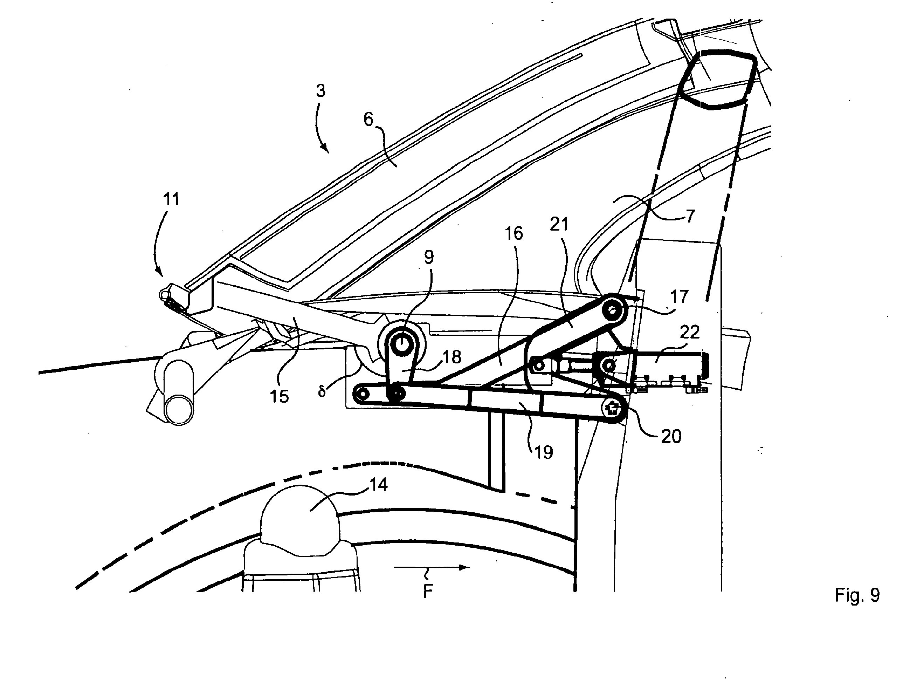

In den Figuren 1 und 9 ist noch als besondere Zusatzoption eingezeichnet, daß die Anlenkung 20 des Kurbeltriebs 18,19 und/oder des Schwenkhebels 16 an der Fahrzeugkarosserie 10 an einem beweglichen Hebel 21 gehalten ist, der selbst während des Dachöffnens oder -schließens unbewegt bleibt und damit sicherstellt, daß während dieser Bewegungen die Achsen 17 und 20 wie karosseriefeste Achsen wirken. Bei geöffnetem Dach 2 und einem geöffneten Heckdeckelteil D ist jedoch über Ausschieben des Hubzylinders 22 die Achse 20 nach hinten und oben verlagerbar, so daß das Dach in einer von seiner Schließbewegung abweichenden Bewegung, nämlich ohne daß sich der Winkel zwischen den Dachabschnitten 3 und 4 vergrößert, anhebbar ist. Damit ist eine Vergrößerung einer Gepäckeinladeöffnung unter das geöffnete Dach 2 ermöglicht, wobei dadurch, daß die Dachteile 3, 4 flach zusammengelegt bleiben, diese Öffnung deutlich größer als bei sonst bekannter Einleitung der Schließbewegung mit Vergrößerung des Winkels der Dachabschnitte 3, 4 untereinander ausfallen kann.

Eine weitere Zusatzoption sieht vor, daß die hintere Dacheinheit 3 über ihre Höhenerstreckung geteilt ist und außer dem mittleren Bereich 5 mit der Heckscheibe 6 zumindest im wesentlichen seitlich neben diesem gelegene und gegenüber der Heckscheibe 6 bewegliche C-Säulen 7 umfaßt. Diese können auch Querausleger oder ähnliches umfassen, die sich ober- oder unterhalb der Heckscheibe 6 in Richtung einer vertikalen Längsmittelebene erstrecken. Die C-Säulen 7 sind hier bei der Dachöffnung gegenüber dem mittleren Abschnitt mit der Heckscheibe 6 des Dachteils 3 um Drehachsen einschwenkbar, die zumindest teilweise gleichzeitig erste Antriebswellen für das Einschwenken des vorgeordneten Dachteils 4 gegenüber dem hinteren Dachteil 3 bilden und die bei geschlossenem Dach 2 jeweils zumindest eine Komponente in Fahrtrichtung F und eine aufwärts gerichtete Komponente aufweisen. In den hier gezeigten Ausführungbeispielen liegen die Drehachsen parallel zur Erstreckungsebene des hinteren Dachteils 3 und parallel zu den seitlichen Rändern der Heckscheibe 6, was nicht zwingend ist.

Die Verschwenkungsbewegung der hinteren Dacheinheit 3 um die horizontale und quer zum Fahrzeug 1 liegende Lagerachse 9 wird über untere Kreuzgelenke in eine Drehbewegung der Drehachsen übersetzt, so daß mit der Dachöffnung gleichzeitig die C-Säulen 7 einschwenken. Am oberen Ende der hinteren Dacheinheit 3 findet eine weitere Übersetzung in eine Heranschwenkbewegung des vorgeordneten Dachteils 4 an die hintere Dacheinheit 3 statt, zum Beispiel über weitere Kreuzgelenke.

Damit genügt insgesamt zur Bewegung des hinteren Dachteils 3 um die quer zum Fahrzeug 1 liegende Lagerachse 9, des vorgeordneten Dachteils 4 um die zweite Horizontalschwenkachse und zur Drehbewegung der C-Säulen 7 um deren Drehachsen ein einziger Antrieb.

Das gesamte bewegliche Dach 2 kann vor Einbau in den Rohbau auf Funktion getestet werden; die so fertig eingestellte modulare Einheit kann dann an den Rohbau angeliefert und lediglich über seitliche Hauptlager mit diesem verbunden werden.

Die Erfindung ist sowohl bei Fahrzeugen mit manuell zu bewegenden Dächern auch insbesondere bei voll- oder teilautomatischer Beweglichkeit des Daches 2 anwendbar.

## Patentansprüche

1. Cabriolet-Fahrzeug (1) mit einer hinteren, eine Heckscheibe (6) umfassenden Dacheinheit (3), wobei zumindest die Heckscheibe (6) während der Dachöffnung zumindest im wesentlichen um eine Halterung (8) heckwärts und abwärts verlagerbar ist,
**dadurch gekennzeichnet,**
**daß** die Halterung (8) während der Heckwärts- und Abwärtsverlagerung zumindest der Heckscheibe (6) um die Halterung (8) gegenüber der geschlossenen Dachstellung bezüglich der Fahrzeugkarosserie (10) lageveränderlich ist.

2. Cabriolet-Fahrzeug (1) nach Anspruch 1,
**dadurch gekennzeichnet,**
**daß** die Halterung (8) während der Dachöffnung gegenüber der geschlossenen Dachstellung bezüglich der Fahrzeugkarosserie (10) aufwärts verlagert ist.

3. Cabriolet-Fahrzeug (1) nach einem der Ansprüche 1 oder 2,
**dadurch gekennzeichnet,**
**daß** die Position der Halterung (8) gegenüber der Fahrzeugkarosserie (10) in geöffneter und geschlossener Dachstellung gleich ist.

4. Cabriolet-Fahrzeug (1) nach einem der Ansprüche 1 bis 3,
**dadurch gekennzeichnet,**
**daß** die bewegliche Halterung (8) eine Lagerachse (9) umfaßt, um die herum die Heckscheibe (6) schwenkbar ist.

5. Cabriolet-Fahrzeug (1) einem der Ansprüche 1 bis 4,
**dadurch gekennzeichnet,**
**daß** die Verlagerung der Halterung (8) mit Hilfe eines Kurbeltriebs (18;19) bewirkbar ist.

6. Cabriolet-Fahrzeug (1) nach einem der Ansprüche 4 oder 5,
**dadurch gekennzeichnet,**
**daß** die Heckscheibe (6) mittelbar oder unmittelbar über einen bezüglich dieser starren Hebel (15) mit der Lagerachse (9) verbunden ist.

7. Cabriolet-Fahrzeug (1) nach einem der Ansprüche 5 oder 6,
**dadurch gekennzeichnet,**
**daß** die Drehbewegung des Hebels (15) um die Lagerachse (9) und gleichzeitig die Verlagerung der Halterung (8) mit Hilfe des Kurbeltriebs (18;19) über einen im Bereich der Lagerachse (9) gelegenen Antrieb bewirkbar sind.

8. Cabriolet-Fahrzeug (1) nach Anspruch 7,
**dadurch gekennzeichnet,**
**daß** der starre Hebel (15) und ein Hebel (18) des Kurbeltriebs (18;19) mit zueinander starrem Winkel (δ) um die Lagerachse (9) bewegbar sind.

9. Cabriolet-Fahrzeug (1) nach einem der Ansprüche 4 bis 8,
**dadurch gekennzeichnet,**
**daß** die Halterung neben dem Kurbeltrieb (18;19 über einen starr mit der Halterung (8) verbundenen Schwenkhebel (16) an der Karosserie (10) gehalten ist.

10. Cabriolet-Fahrzeug (1) nach einem der Ansprüche 4 bis 9,
**dadurch gekennzeichnet,**
**daß** die Anlenkung (20;17) des Kurbeltriebs (18;19) und/oder des Schwenkhebels (16) an der Fahrzeugkarosserie (10) derart beweglich ist, daß bei geöffnetem Dach (2) und einem geöffneten Heckdeckelteil (D) das Dach (2) in einer von seiner Schließbewegung abweichenden Bewegung anhebbar ist zur Vergrößerung einer Gepäckeinladeöffnung unter das geöffnete Dach (2).

11. Cabriolet-Fahrzeug (1) nach einem der Ansprüche 1 bis 10,
**dadurch gekennzeichnet,**
**daß** in der hinteren Dacheinheit (3) seitlich der Heckscheibe (6) liegende C-Säulen (7) während der Dachöffnung gegenüber der Heckscheibe (6) einschwenkbar sind.

12. Bewegliches Fahrzeugdach (2) für ein Cabriolet-Fahrzeug (1) nach einem der Ansprüche 1 bis 11.

## Claims

1. A convertible vehicle (1) with a rear roof unit (3) comprising a rear window (6), wherein at least the rear window (6) can be displaced rearward and downward at least substantially around a support (8) during the opening of the roof, **characterised in that**, during the rearward and downward displacement of at least the rear window (6) around the support (8), the position of the support (8) can be shifted with respect to the closed roof position relative to the vehicle body (10).

2. The convertible vehicle (1) according to claim 1, **characterised in that** the support (8) is shifted upwards relative to the vehicle body (10) during the opening of the roof with respect to the closed roof position.

3. The convertible vehicle (1) according to any one of claims 1 or 2, **characterised in that** the position of the support (8) with respect to the vehicle body (10) is the same in both the opened and the closed roof position.

4. The convertible vehicle (1) according to any one of claims 1 to 3, **characterised in that** the movable support (8) comprises a bearing axis (9) about which the rear window (6) can be pivoted.

5. The convertible vehicle (1) according to any one of claims 1 to 4, **characterised in that** the shifting of the support (8) can be effected with the help of a crank mechanism (18;19).

6. The convertible vehicle (1) according to any one of claims 4 or 5, **characterised in that** the rear window (6) is connected to the bearing axis (9) indirectly or directly via a lever (15) which is fixed with respect to the rear window (6).

7. The convertible vehicle (1) according to any one of claims 5 or 6, **characterised in that** the rotary movement of the lever (15) about the bearing axis (9) and, at the same time, the shifting of the support (8) with the help of the crank mechanism (18;19) can be effected via a drive disposed in the area of the bearing axis (9).

8. The convertible vehicle (1) according to claim 7, **characterised in that** the fixed lever (15) and a lever (18) of the crank mechanism (18;19) are movable around the bearing axis (9) with a fixed angle (δ) between them.

9. The convertible vehicle (1) according to any one of claims 4 to 8, **characterised in that** the support is held next to the crank mechanism (18;19) on the vehicle body (10) by a pivoting lever (16) which is fixedly connected to the support (8).

10. The convertible vehicle (1) according to any one of claims 4 to 9, **characterised in that** the articulation (20;17) of the crank mechanism (18;19) and/or of the pivoting lever (16) to the vehicle body (10) is movable in such a way that, when the roof (2) is opened and a rear lid part (D) is also opened, the roof (2) can be lifted by a movement differing from its closing movement, thereby enlarging a luggage loading opening to under the opened roof (2).

11. The convertible vehicle (1) according to any one of claims 1 to 10, **characterised in that** C pillars (7) located laterally of the rear window (6) in the rear roof unit (3) can be pivoted inward with respect to the rear window (6) during the roof opening.

12. Movable roof (2) for a convertible vehicle (1) according to any one of claims 1 to 11.

## Revendications

1. Véhicule cabriolet (1) avec un ensemble de toit arrière (3) comprenant une lunette arrière (6), au moins la lunette arrière (6) pouvant être déplacée au moins sensiblement autour d'un support (8) vers l'arrière et vers le bas pendant l'ouverture du toit,
**caractérisé en ce que** la position du support (8) peut être modifiée, pendant le déplacement vers l'arrière et vers le bas d'au moins la lunette arrière (6) autour du support (8), relatif à la position fermée du toit par rapport à la carrosserie (10).

2. Véhicule cabriolet (1) selon la revendication 1, **caractérisé en ce que** le support (8) est déplacé vers le haut par rapport à la carrosserie (10) pendant l'ouverture du toit relatif à la position fermée du toit.

3. Véhicule cabriolet (1) selon l'une quelconque des revendications 1 ou 2, **caractérisé en ce que** la position du support (8) par rapport à la carrosserie (10) est la même dans les positions ouverte et fermée du toit.

4. Véhicule cabriolet (1) selon l'une quelconque des revendications 1 à 3, **caractérisé en ce que** le support déplaçable (8) comprend un axe de palier (9) autour duquel la lunette arrière (6) peut pivoter.

5. Véhicule cabriolet (1) selon l'une quelconque des revendications 1 à 4, **caractérisé en ce que** le déplacement du support (8) peut s'effectuer à l'aide d'un mécanisme à manivelle (18; 19).

6. Véhicule cabriolet (1) selon l'une quelconque des revendications 4 ou 5, **caractérisé en ce que** la lunette arrière (6) est reliée à l'axe de palier (9) indirectement ou directement par un levier (15) qui est fixe par rapport à la lunette arrière (6).

7. Véhicule cabriolet (1) selon l'une quelconque des revendications 5 ou 6, **caractérisé en ce que** le mouvement rotatif du levier (15) autour de l'axe de palier (9) et, en même temps, le déplacement du support (8) à l'aide du mécanisme à manivelle (18;19), peuvent être effectués au moyen d'un entraînement disposé dans la région de l'axe de palier (9).

8. Véhicule cabriolet (1) selon la revendication 7, **caractérisé en ce que** le levier fixe (15) et un levier (18) du mécanisme à manivelle (18;19) sont déplaçables autour de l'axe de palier (9) avec un angle fixe (δ) entre eux.

9. Véhicule cabriolet (1) selon l'une quelconque des revendications 4 à 8, **caractérisé en ce que** le support est maintenu à côté du mécanisme à manivelle (18;19) sur la carrosserie (10) par un levier pivotant (16) qui est relié rigidement au support (8).

10. Véhicule cabriolet (1) selon l'une quelconque des revendications 4 à 9, **caractérisé en ce que** l'articulation (20;17) du mécanisme à manivelle (18;19) et/ou du levier pivotant (16) à la carrosserie (10) est déplaçable de sorte que, le toit (2) et un élément de couvercle arrière (D) étant ouverts en même temps, le toit (2) puisse être levé par un mouvement qui se distingue de son mouvement de fermeture, pour ainsi élargir une ouverture de chargement de bagages jusqu'au-dessous du toit ouvert (2).

11. Véhicule cabriolet (1) selon l'une quelconque des revendications 1 à 10, **caractérisé en ce que** des montants C (7), qui sont disposés latéralement à une lunette arrière (6) dans l'ensemble de toit arrière (3), peuvent pivoter vers l'intérieur par rapport à la lunette arrière (6) pendant l'ouverture du toit.

12. Toit mobile (2) pour un véhicule cabriolet (1) selon l'une quelconque des revendications 1 à 11.
